# EUROPÄISCHE PATENTSCHRIFT

(11) **EP 1 222 545 B1**
(45) Veröffentlichungstag und Bekanntmachung des Hinweises auf die Patenterteilung: **27.10.2010**
(21) Anmeldenummer: 00956493.1
(22) Anmeldetag: 29.08.2000
(51) Int. Cl.: G06F 11/10

(54) **VERFAHREN UND SCHALTUNGSANORDNUNG ZUM SPEICHERN VON DATENWORTEN IN EINEM RAM MODUL**
METHOD AND CIRCUIT CONFIGURATION FOR STORING DATA WORDS IN A RAM MODULE
PROCEDE ET MONTAGE SERVANT A L'ENREGISTREMENT DE MOT DE DONNEES DANS UN MODULE DE MEMOIRE VIVE

(30) Priorität: 22.09.1999 DE 19945494; 15.04.2000 DE 10018722
(43) Veröffentlichungstag der Anmeldung: 17.07.2002
(73) Patentinhaber: Continental Teves AG & Co. oHG, 60488 Frankfurt am Main (DE)
(72) Erfinder: FEY, Wolfgang, D-65527 Niedernhausen (DE); TRASKOV, Adrian, D-61449 Steinbach (DE); TRUOEL, Jan, D-64347 Griesheim (DE)
(86) Internationale Anmeldenummer: PCT/EP2000/008398
(87) Internationale Veröffentlichungsnummer: WO 2001/022225

(56) Entgegenhaltungen:
- US-A- 3 972 033
- US-A- 4 277 844
- US-A- 4 710 934

## Beschreibung

Die Erfindung betrifft eine Schaltungsanordnung zum Speichern von Datenworten in einem RAM Modul insbesondere für sicherheitskritischen Anwendungen.

RAM (Random Access Memory) Module sind allgemein bekannt und weit verbreitet. Sie dienen zum wiederholten Speichern und Auslesen von Daten für eine Vielzahl von Anwendungen. Der Sicherheit der in dem RAM Modul gespeicherten Daten muss bei der Auslegung der Speicherarchitektur besondere Beachtung geschenkt werden. Bei einer bekannten Architektur wird die Datensicherheit durch eine voll redundante Auslegung des Moduls in relativ zuverlässiger Weise gewährleistet. Ein wesentlicher Nachteil hierbei besteht jedoch darin, dass der Schaltungsaufwand und der Bedarf an Siliziumfläche relativ hoch ist.

Aus der US 4,277,844 ist ein RAM-Speicher für CCD-Chips bekannt, bei dem zur Fehlererkennung und -korrektur während des Schreibens oder des Lesens von digitalen Daten eine horizontale und vertikale Erzeugung von Paritätsbits durchgeführt wird. Die verwendeten Prüfdaten können entweder nach einem CRC-Verfahren (cyclic redundancy code) oder nach dem Prinzip des Hamming-Codes erzeugt sein. Die erzeugten Prüfdaten werden in gesonderten Speicherplätzen gespeichert, die ein Teil des gesamten Datenspeichers darstellen.

Die US 4,710, 934 beschreibt ebenfalls einen RAM-Speicher, welcher in Reihen und Spalten angeordnete Speicherzellen umfasst, in denen Prüfdaten zur Absicherung von Speicherzugriffen abgelegt werden. Die beschriebene Speicherarchitektur ist u.a. für Video-RAM Speicher konzipiert.

Der Erfindung betrifft eine Schaltungsanordnung wie in Anspruch 1 beschrieben.

Die Schaltungsanordnung in Anspruch 1 zeichnet, sich aus, durch: eine erste Schaltungseinheit zur Erzeugung eines Prüfbit-Wortes aus mindestens einem Datenwort beim Schreiben und Lesen des mindestens einen Datenwortes, eine Anzahl von Registern zur zugeordneten Speicherung von Prüfbit-Worten für die Datenworte, sowie eine zweite Schaltungseinheit, mit der beim Lesen von Datenworten das zugeordnete Prüfbit-Wort mit dem durch die erste Schaltungseinheit erneut erzeugten Prüfbit-Wort verglichen wird, sowie zur Erzeugung einer Fehlermeldung, wenn die Prüfbit-Worte nicht übereinstimmen, somie ein zweites Register (12) zur Speicherung eines weiteren Prufbit-Wortes, **dadurch gekennzeichnet, dass** die Bits des zweiten Registers jeweils aus gleichen Stellen aller Datenworte ermittelt werden, und, dass die Schaltungsanordnung ein drittes Register (13) zur Speicherung eines dritten Prüfbit-Wortes umfasst, das aus dem Inhalt des zweiten Registers (12) ermittelt wird.

Ein besonderer Vorteil dieser Lösung besteht darin, dass bei im wesentlichen gleicher Datensicherheit wie bei der eingangs genannten voll redundanten Auslegung die erforderliche Siliziumfläche und damit auch der Schaltungsaufwand und die Kosten wesentlich geringer sind.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung einer bevorzugten Ausführungsform anhand der Zeichnung. Es zeigt:
Fig. 1 eine schematische Darstellung einer ersten Speicherarchitektur;
Fig. 2 eine schematische Darstellung des Ablaufes eines Schreibvorgangs;
Fig. 3 eine schematische Darstellung des Ablaufes eines Lesevorgangs;
Fig. 4 die Erzeugung einer wortorientierten Parität;
Fig. 5 eine schematische Darstellung einer zweiten Speicherarchitektur; und
Fig. 6 die Erzeugung einer spaltenorientierten Parität.

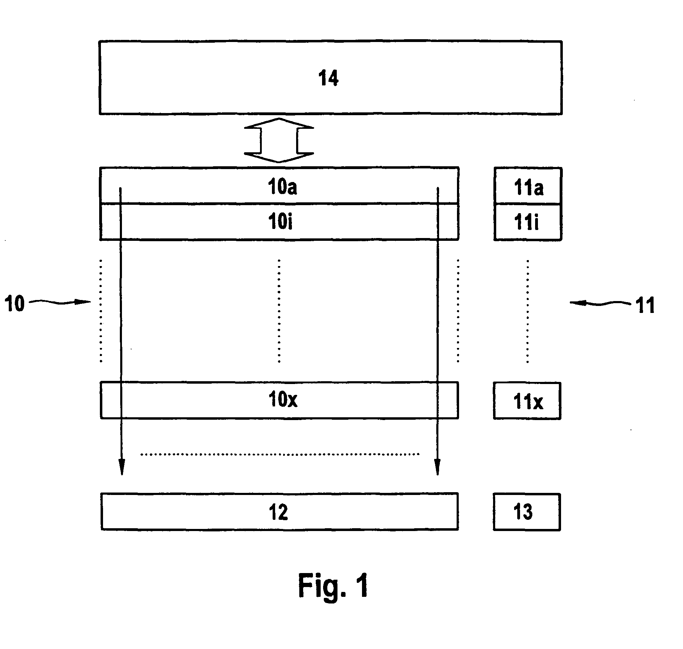

Ein RAM Modul umfasst gemäß Figur 1 im wesentlichen ein wortorientiertes Array 10 aus einer Anzahl von 32 Bit Datenwort-Registern 10a,..10i,...10x, die reihenweise untereinander angeordnet dargestellt sind. Jedem Datenwortregister ist ein 2 Bit Paritätswort-Register 11a,...11i,...11x zugeordnet, so dass sich ein 2 Bit Paritäts-Array 11 ergibt. Weiterhin ist ein 32 Bit Paritätswort-Register 12 vorgesehen, dem wiederum ein 2 Bit Paritätswort-Register 13 zugeordnet ist.

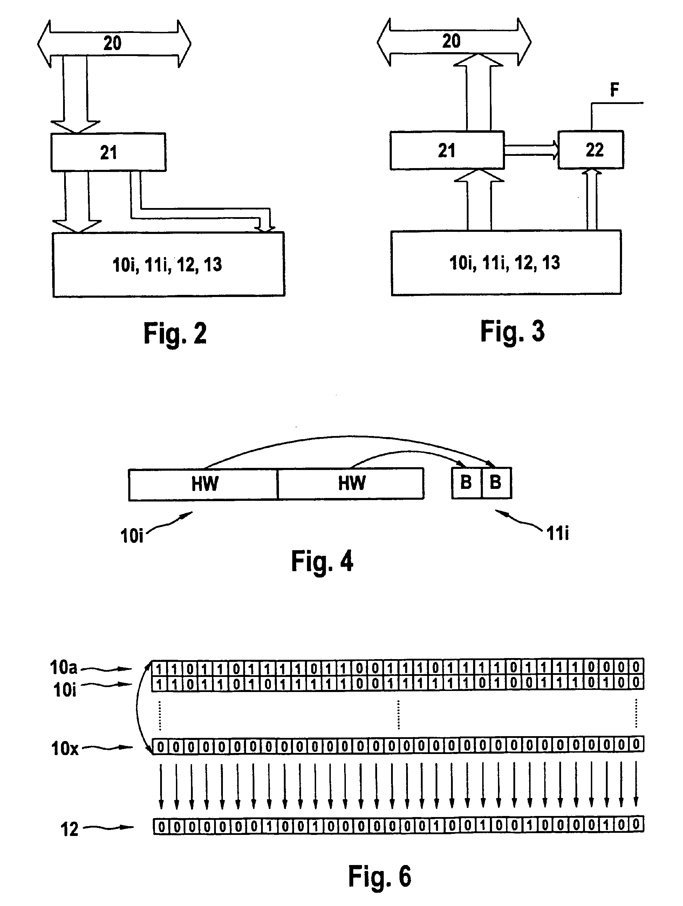

Zum Datenaustausch ist diese Anordnung in bekannter Weise mit einer Bus-Interfaceeinheit 14 verbunden, über die eine Verbindung zu einem CPU-Bus hergestellt werden kann. Die Bus-Interfaceeinheit 14 umfasst weiterhin Schaltungseinheiten zum Erzeugen und zum Vergleich der Paritätsworte bei Schreib- und Lesevorgängen, die in den Figuren 2 und 3 dargestellt sind.

Zum Schreiben in das RAM Modul werden gemäß Figur 2 die betreffenden Datenwörter von einem 32 Bit Datenbus 20 zu einer ersten Schaltungseinheit 21 geführt, mit der zu jedem Datenwort ein 2 Bit Paritätswort erzeugt wird. Anschließend wird das Datenwort in eines der Datenwort-Register 10i in dem RAM Modul und das 2 Bit Paritätswort in das zugeordnete 2 Bit Paritätswort-Register 11i eingeschrieben.

Zum Lesen von Datenwörtern aus dem RAM Modul wird gemäß Figur 3 das adressierte Datenwort zunächst in die erste Schaltungseinheit 21 überführt. Gleichzeitig wird das zugeordnete 2 Bit Paritätswort in eine zweite Schaltungseinheit 22 übertragen. In der ersten Schaltungseinheit 21 wird aus dem ausgelesenen Datenwort wiederum ein 2 Bit Paritätswort erzeugt, das in die zweite Schaltungseinheit 22 überführt und dort mit dem direkt aus dem RAM Modul ausgelesenen 2 Bit Paritätswort verglichen wird. Wenn diese beiden Wörter nicht übereinstimmen, wird ein Fehlersignal F erzeugt oder ein entsprechendes Fehler-Flag gesetzt. Wenn die 2 Bit Paritätswörter übereinstimmen, wird das ausgelesene Datenwort auf den Datenbus 20 übertragen.

Gemäß Figur 4 setzt sich jedes 32 Bit Datenwort aus einem ersten und einem zweiten 16 Bit Halbwort HW zusammen, wobei aus jedem Halbwort ein Bit B des 2 Bit Paritätswortes erzeugt wird.

Durch die automatische Erzeugung und den automatischen Vergleich dieser wortorientierten Paritäten können einzelne Bitfehler sofort "online" beim Auslesen aus dem RAM Modul erkannt werden.

Um eine noch höhere Fehlersicherheit zu erreichen, läßt sich die 2 Bit Paritätserzeugung auch durch eine CRC (cyclic redundandy check) -Prüfung mit einem für jedes Datenwort gemäß einem Polynom berechneten CRC-Wort ersetzen. Um ein sinnvolles Verhältnis zwischen der Breite eines Datenwortes und der Breite eines CRC-Wortes zu erreichen, wird die Speicherarchitektur so gewählt, dass die Breite der gespeicherten Datenworte (Speicherworte) ein Vielfaches der Breite der Datenworte auf dem Datenbus ist. Bei einer Datenwort-Breite von 32 Bit hat das Speicherwort vorzugsweise eine Breite von 128 Bit und das CRC-Wort für eine optimale Fehlersicherheit eine Breite von 9 Bit.

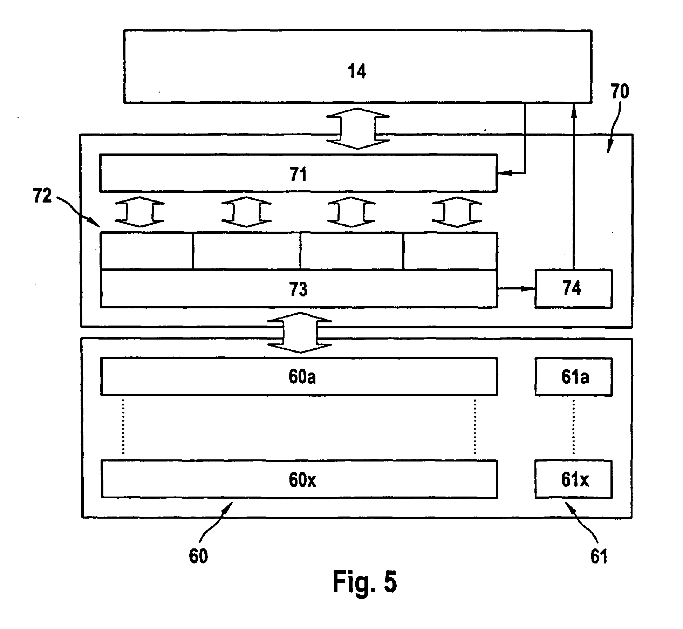

Figur 5 zeigt eine entsprechende Anordnung, die über die Bus-Interfaceeinheit 14 mit einem 32 Bit Datenbus (nicht dargestellt) verbunden ist.

Das RAM Modul umfasst ein Array 60 aus einer Anzahl von 128 Bit Speicherwort-Registern 60a,...60x, die reihenweise untereinander angeordnet dargestellt sind. Jedem Speicherwort-Register ist ein CRC-Register 61a,...61x mit zum Beispiel jeweils 9 Bit zugeordnet, so dass sich ein CRC-Array 61 ergibt.

Zwischen das Array 60 und die Bus-Interfaceeinheit 14 ist eine Einheit 70 geschaltet, die einen Multiplexer 71 für jeweils vier 32 Bit Datenworte sowie ein 128 Bit CRC-Rechenregister 72 zur Aufnahme von vier 32 Bit Datenworten aufweist. Weiterhin umfasst die Einheit 70 eine CRC-Recheneinheit 73, mit der aus dem Inhalt des 128 Bit CRC-Rechenregisters 72 mit bekannten Rechenverfahren ein 9 Bit CRC-Wort berechnet und in einem 9 Bit CRC-Register 74 zwischengespeichert wird, das wiederum mit der Bus-Interfaceeinheit 14 verbunden ist.

Die Schreib- und Lesevorgänge laufen im wesentlichen in gleicher Weise ab, wie es in den Figuren 2 und 3 dargestellt ist.

Beim Einschreiben in das RAM Modul werden jeweils vier über die Bus-Interfaceeinheit 14 zugeführte 32 Bit Datenworte mit dem Multiplexer 71 zyklisch nacheinander in das 128 Bit CRC-Rechenregister 72 eingespeichert, so dass sich ein 128 Bit Speicherwort ergibt. Mit der CRC-Recheneinheit 73 wird daraus dann das 9 Bit CRC-Wort berechnet und in das 9 Bit CRC-Register 74 eingetragen. Anschließend wird der Inhalt des 128 Bit CRC-Rechenregisters 72 in eines der 128 Bit Speicherwort-Register 60i des RAM Arrays und der Inhalt des 9 Bit CRC-Registers 74 in das zugeordnete 9 Bit CRC-Wortregister 61i eingespeichert.

Beim Schreiben eines neuen 32 Bit Datenwortes (oder kleinerer Worteinheiten) in das RAM Modul ist es erforderlich, das CRC-Wort des betreffenden 128 Bit Speicherwort-Registers 60i neu zu berechnen. Dies bedeutet, dass vor dem Schreiben des neuen Datenwortes zunächst der Inhalt des betreffenden 128 Bit Speicherwort-Registers 60i vollständig ausgelesen und in das CRC-Rechenregister 72 eingespeichert werden muss, um dann mit der CRC-Recheneinheit 73 auf der Grundlage des neuen Datenwortes das 9 Bit CRC-Wort neu zu berechnen und in dem CRC-Register 74 abzulegen. Die Inhalte beider Register 72, 74 werden dann in die entsprechenden Register 60i, 61i übertragen.

Sofern vor dem Schreiben eines neuen 32 Bit Datenwortes eine Fehlerprüfung durchgeführt werden soll, die zum Beispiel durch eine Software mit bestimmten Zeitabständen veranlasst werden kann, wird wie oben erwähnt zunächst der Inhalt des betreffenden 128 Bit Speicherwort-Registers 60i und der Inhalt des zugeordneten CRC-Registers 61i ausgelesen. Anschließend wird mit der CRC-Recheneinheit 73 daraus erneut das 9 Bit CRC-Wort erzeugt und mit dem ausgelesenen CRC-Wort verglichen. Wenn diese beiden CRC-Worte nicht übereinstimmen, wird ein Fehlersignal F (oder ein entsprechendes Fehler-Flag) erzeugt. Wenn die CRC-Worte übereinstimmen, wird, wie oben erläutert wurde, aus dem das neue 32 Bit Datenwort enthaltenden 128 Bit Speicherwort ein neues 9 Bit CRC Wort berechnet, und beide werden in das entsprechende 128 Bit Speicherwort-Register 60i bzw. das zugeordnete 9 Bit CRC Register 61i des RAM Moduls eingelesen.

Die Fehlerprüfung kann auch dann durchgeführt werden, wenn ein Datenwort aus dem RAM Modul auf den Datenbus 20 ausgelesen werden soll. Zu diesem Zweck wird der Inhalt des das betreffende Datenwort enthaltenden Speicherwort-Registers 60i in das CRC-Rechenregister 72 übertragen und daraus erneut das CRC-Wort berechnet. Dieses CRC-Wort wird mit dem in dem zugeordneten CRC-Wort-Register 61i gespeicherten CRC-Wort verglichen. Wenn beide Worte nicht übereinstimmen, wird eine Fehlermeldung F erzeugt oder ein entsprechendes Fehler-Flag gesetzt. Wenn beide CRC-Worte übereinstimmen, wird das ausgelesene 32 Bit Datenwort auf den Datenbus 20 übertragen. Anschließend wird der Inhalt des CRC-Rechenregisters 72 in das entsprechende 128 Bit Speicherwort-Register 60i zurückgeführt.

Figur 6 zeigt mehrere Speicherwort-Register 10a, 10i,.. 10x, für 32 Bit Datenworte sowie ein 32 Bit Paritätswort-Register 12, wobei für jede Stelle beispielhaft ein Bit mit dem Wert 0 oder 1 dargestellt ist.

Im Unterschied zu der in den Figuren 4 und 5 gezeigten, wortorientierten Prüfbit-Erzeugung wird gemäß Figur 6 eine spaltenorientierte Parität erzeugt, bei der für jeweils gleiche Stellen aller Datenworte ein Paritäts-Bit ermittelt wird, das an eine zugeordnete Stelle in dem 32 Bit Paritätswort-Register 12 eingeschrieben wird. Auf diese Weise ergibt sich ein 32 Bit Paritätswort. Weiterhin kann nun zu diesem 32 Bit Paritätswort in gleicher Weise wie es für die wortorientierte Parität anhand der Figur 4 beschrieben wurde, ein 2 Bit Paritätswort erzeugt und in dem 2 Bit Paritätswort-Register 13 (siehe Figur 1) abgespeichert werden. Entsprechend der vorstehend beschriebenen Weise kann auch eine spaltenorientierte Paritätsprüfung bei der Ausführungsform gemäß Fig. 5 mit 128 Bit breiten Datenworten durchgeführt werden.

Während des Schreibens eines neuen Datenwortes in einem der Wortregister 10i des RAM Moduls wird zunächst der Inhalt des Datenwortes der zu beschreibenden Speicherstelle im RAM Modul, d.h. im Beispiel ein 32 Bit Datenwort-Register 10i, sowie das 32 Bit Paritätswort-Register 12 ausgelesen. Anschließend wird der Wert des spaltenorientierten 32 Bit Paritätsworts erneut ermittelt und beschrieben.

Darauffolgend wird das neue Datenwort in die entsprechenden Datenwort-Register 10i zurückgeschrieben und der Inhalt des 32 Bit Paritätswort-Registers 12 neu ermittelt. Im Anschluss daran kann zu dem 32 Bit Paritätswort wieder eine 2 Bit Parität erzeugt und in dem 2 Bit Paritätswort-Register 13 (siehe Figur 1) gespeichert werden.

Während eines normalen Lesevorgangs wird vorzugsweise keine Fehlerüberprüfung durchgeführt.Eine zusätzliche Fehlerprüfung kann dadurch erfolgen, daß in der vorstehend beschriebenen Weise beispielsweise zum Zeitpunkt während eines Lesevorgangs der Inhalt sämtlicher Datenwort-Register 10i ausgelesen wird, das spaltenorientierte 32 Bit Paritätswort erneut erzeugt und mit dem in dem Paritätswort-Register 12 gespeicherten Paritätswort verglichen wird. Wenn die Paritätsworte nicht übereinstimmen, wird eine Fehlermeldung F erzeugt oder ein entsprechendes Fehler-Flag gesetzt. Wenn die Paritätsworte übereinstimmen, wird das ausgelesene Datenwort auf den Datenbus 20 übertragen. Die hier beschriebene Ausführungsform zur spaltenorientierten Fehlerprüfung im ganzen RAM wird sinnvollerweise nicht bei jedem Schreib-oder Lesevorgang, sondern mit bestimmten Zeitabständen vorgenommen, wobei die Zeitabstände durch die verwendete Software vorgegeben sein können. Die Entscheidung, ob diese Fehlerprüfung erfolgt oder nicht, wird bevorzugt durch die verwendete Software vorgenommen.

Das 2 Bit Paritätswort des 32 Bit Paritätswortes kann in gleicher Weise zur Fehlerüberprüfung verwendet werden, wie es anhand der Figuren 2 bis 4 für die 2 Bit Paritätsworte der Datenwörter beschrieben wurde.

Anstelle der spaltenorientierten Parität kann auch eine spaltenorientierte CRC (Cyclic Redundancy Check) -Summe gebildet und zur Fehlerprüfung verwendet werden. Auch hierbei wird vor dem Schreiben und / oder Lesen eines Wortes zunächst der Inhalt sämtlicher Datenwort-Register 10i sowie des Prüfbit-Registers 12 ausgelesen und erneut das CRC-Wort ermittelt. Wenn dieses CRC-Wort nicht mit dem gespeicherten CRC-Wort übereinstimmt, wird eine Fehlermeldung F erzeugt oder ein entsprechendes Fehler-Flag gesetzt. Wenn beide CRC-Worte übereinstimmen, wird der Schreib- oder Lesevorgang in der oben für die spaltenorientierte Paritätswort-Erzeugung beschriebenen Weise abgeschlossen.

Mit der spaltenorientierten Parität sowie einem zyklisch ablaufenden Paritäts-Test bzw. der CRC-Prüfsumme und einer zyklischen CRC-Berechnung lassen sich auch Fehler im Adress-Decoder sowie Doppel-Bitfehler und weitere Fehler ermitteln. Die Tests bzw. Berechnungen werden vorzugsweise durch eine entsprechende Software durchgeführt.

## Patentansprüche

1. Schaltungsanordnung zum Speichern von Datenworten in einem RAM Modul, umfassend eine erste Schaltungseinheit (21) zur Erzeugung eines Prüfbit-Wortes aus mindestens einem Datenwort beim Schreiben und Lesen des mindestens einen Datenwortes, eine Anzahl von Registern (11i, 61) zur zugeordneten Speicherung von Prüfbit-Worten für die Datenworte, eine zweite Schaltungseinheit (22), mit der beim Lesen von Datenworten das zugeordnete Prüfbit-Wort mit dem durch die erste Schaltungseinheit (21) erneut erzeugten Prüfbit-Wort verglichen wird, sowie zur Erzeugung einer Fehlermeldung (F), wenn die Prüfbit-Worte nicht übereinstimmen, sowie ein zweites Register (12) zur Speicherung eines weiteren Prufbit-Wortes, **dadurch gekennzeichnet, dass** die Bits des zweiten Registers jeweils aus gleichen Stellen aller Datenworte ermittelt werden, und, dass die Schaltungsanordnung ein drittes Register (13) zur Speicherung eines dritten Prüfbit-Wortes umfasst, das aus dem Inhalt des zweiten Registers (12) ermittelt wird.

2. Schaltungsanordnung nach Anspruch 1, **dadurch gekennzeichnet, dass** die Anzahl von Registern durch erste 2 Bit Paritätsregister (11i) gebildet ist, wobei jedem Datenwort ein 2 Bit Paritätsregister zugeordnet ist.

3. Schaltungsanordnung nach Anspruch 1, **dadurch gekennzeichnet, dass** die Anzahl von Registern durch CRC-Register (61) gebildet ist, wobei jeweils vier Datenworten ein CRC-Register zugeordnet ist.

4. Schaltungsanordnung nach Anspruch 3, **gekennzeichnet durch** einen Multiplexer (71) zur Speicherung von jeweils vier Datenworten als ein Speicherwort, sowie eine CRC-Recheneinheit (73) zur Berechnung des CRC-Wortes aus einem Speicherwort sowie zur Speicherung des CRC-Wortes in einem zugeordneten CRC-Register (61, 74).

5. Schaltungsanordnung nach Anspruch 4, **dadurch gekennzeichnet, dass** die Datenworte 32 Bit Worte und die CRC-Worte 9 Bit Worte sind.

## Claims

1. Circuit arrangement for storing data words in a RAM module, comprising
a first circuit unit (21) for producing a check bit word from at least one data word when writing and reading the at least one data word,
a number of registers (lli, 61) for the associated storage of check bit words for the data words,
a second circuit unit (22) which is used to compare the associated check bit word with the check bit word produced again by the first circuit unit (21) when reading data words, and for producing an error message (F) if the check bit words do not match, and also a second register (12) for storing a further check bit word, **characterized in that** the bits of the second register are respectively ascertained from the same locations in all data words, and **in that** the circuit arrangement comprises a third register (13) for storing a third check bit word which is ascertained from the content of the second register (12).

2. Circuit arrangement according to Claim 1, **characterized in that** the number of registers is formed by first two-bit parity registers (11i), wherein each data word has an associated two-bit parity register.

3. Circuit arrangement according to Claim 1, **characterized in that** the number of registers is formed by CRC registers (61), wherein four respective data words have an associated CRC register.

4. Circuit arrangement according to Claim 3, **characterized by** a multiplexer (71) for storing four respective data words as a memory word, and also a CRC computation unit (73) for calculating the CRC word from a memory word and for storing the CRC word in an associated CRC register (61, 74).

5. Circuit arrangement according to Claim 4, **characterized in that** the data words are 32-bit words and the CRC words are 9-bit words.

## Revendications

1. Arrangement de circuit pour enregistrer des mots de données dans un module à RAM, comprenant une première unité de circuit (21) pour générer un mot de bits de contrôle à partir d'au moins un mot de données lors de l'écriture et de la lecture de l'au moins un mot de données, une pluralité de registres (lli, 61) pour l'enregistrement associé de mots de bits de contrôle pour les mots de données, une deuxième unité de circuit (22) qui, lors de la lecture des mots de données, compare le mot de bits de contrôle correspondant le mot de bits de contrôle de nouveau généré par la première unité de circuit (21) et aussi pour générer un message d'erreur (F) lorsque les mots de bits de contrôle ne coïncident pas, ainsi qu'un deuxième registre (12) pour enregistrer un mot de bits de contrôle supplémentaire, **caractérisé en ce que** les bits du deuxième registre sont déterminés à chaque fois à partir des mêmes positions de tous les mots de données et que l'arrangement de circuit comprend un troisième registre (13) pour enregistrer un troisième mot de bits de contrôle qui est déterminé à partir du contenu du deuxième registre (12).

2. Arrangement de circuit selon la revendication 1, **caractérisé en ce que** la pluralité de registres est formée par des premiers registres de parité à 2 bits (11i), un registre de parité à 2 bits étant associé à chaque mot de données.

3. Arrangement de circuit selon la revendication 1, **caractérisé en ce que** la pluralité de registres est constituée de registres CRC (61), un registre CRC étant associé à chaque fois à quatre mots de données.

4. Arrangement de circuit selon la revendication 3, **caractérisé par** un multiplexeur (71) pour enregistrer à chaque fois quatre mots de données en tant qu'un mot mémorisé ainsi qu'une unité de calcul de CRC (73) pour calculer le mot CRC à partir d'un mot mémorisé et aussi pour enregistrer le mot CRC dans un registre CRC (61, 74) associé.

5. Arrangement de circuit selon la revendication 4, **caractérisé en ce que** les mots de données sont des mots de 32 bits et les mots CRC des mots de 9 bits.
